# EUROPEAN PATENT SPECIFICATION

(11) **EP 0 528 152 B1**
(45) Date of publication and mention of the grant of the patent: **12.06.1996**
(21) Application number: 92111261.1
(22) Date of filing: 02.07.1992
(51) Int. Cl.: G09G 5/06

(54) **Frame buffer organization and control for real-time image decompression**
Rasterpuffer-Organisation und Steuerung für Echtzeit-Bilddekompression
Organisation et contrôle de buffer de trame permettant une décompression d'images en temps réel

(30) Priority: 22.07.1991 US 733944
(43) Date of publication of application: 24.02.1993
(73) Proprietor: International Business Machines Corporation, Armonk, N.Y. 10504 (US)
(72) Inventor: Choi, Sung Min, White Plains, NY 10601 (US); Lumelsky, Leon, Stamford, CT 06905 (US); Peevers, Alan Wesley, Berkely, CA 94708 (US); Pittas, John Louis, Bethel, CT 06806 (US)
(74) Representative: Schäfer, Wolfgang, Dipl.-Ing.

(56) References cited:
- EP-A- 0 279 229
- EP-A- 0 410 777
- US-A- 4 580 134
- US-A- 4 591 842
- US-A- 4 797 729
- US-A- 4 893 114

## Description

This invention relates to high performance display systems, and more particularly, to a frame buffer for use in such a high performance display system wherein image decompression is accomplished in real time.

Scientific visualization helps users better understand the large quantities of data with which they are dealing. These visualizations are typically computed on a large super computers and are sent to user workstations for viewing over a high speed network. One powerful technique for visualization is the use of motion to augment a user's understanding of the data. By creating animations which show various surfaces of the data being viewed and displaying them as a smooth motion sequence, more information about the data being studied can be conveyed.

As the user's display resolution increases, it is increasingly difficult to send enough data over the network to provide the smooth motion required. Even with a high bandwidth communication network, transmitting enough data for smooth motion (30 frames per second or higher) is difficult without the use of some form of compression and decompression. If each pixel is represented by 24 bits, such that each 8 bit byte represents a color, then it can be shown that the data throughput required to show motion is T =3HᵣₑₛVᵣₑₛF_{ref} bytes per second, where T is throughput in bytes per second, Hᵣₑₛ is the horizontal resolution, or number of pixels per scanline, Vᵣₑₛ is the vertical resolution, or number of scanlines per frame, and F_{ref} is the frame rate.

In order to support the high bandwidth for real-time motion video, it is necessary to have a very high bandwidth communication network. One such network is HPPI (High Performance Parallel Interface). HPPI is designed to support a maximum data rate of 100 million bytes per second with a 32-bit wide data bus. However, the bandwidth of even HPPI may not be enough for high resolution, real-time, smooth motion images. For example, in order to show a full scale image on a 2048 x 1536 high resolution display monitor using a 32 bit wide HPPI bus, the maximum frame rate achievable is,${\text{F}}_{\text{ref}} {\text{=T}}_{\text{hppi}} {\text{/(3H}}_{\text{res}} {\text{V}}_{\text{res}} \text{)} \text{= 100,000,000/(3x2048x1536)} \text{= 10.6 frames per second}$ where Tₕₚₚᵢ is the 100,000,000 bytes per second through-put on HPPI

With only 10.6 frames per second, any considerable motion of an object is rendered jerky. One way to achieve smoother motion is to use a communication network with an even higher bandwidth. However, such a high bandwidth communication network is expensive. It may not justify the cost/performance ratio for most users. An alternate way of achieving real-time motion image communication is incorporating an image compression/decompression technique.

An advantage of using compression and decompression of images is that the storage required to record the image sequence at the source is reduced. A graphics server may generate a movie sequence, but store only the compressed image data. This allows the use of the super computer DASD (i.e. disk) storage as a digital video recorder of substantially more image frames than is possible otherwise. Another advantage of compression/decompression is that the bandwidth required to transfer images is reduced.

A favored compression algorithm is the block truncation method that is described in detail by Healy et al. in "Digital Video Bandwidth Compression Using Truncation Coding", IEEE Trans. Comm., COM-9, Dec. 1981, pp. 1809-1823. It provides high quality text and graphic image decompression and reasonable quality television-like natural images. The compression method itself is not directly relevant to this invention and only certain aspects of it will be reviewed.

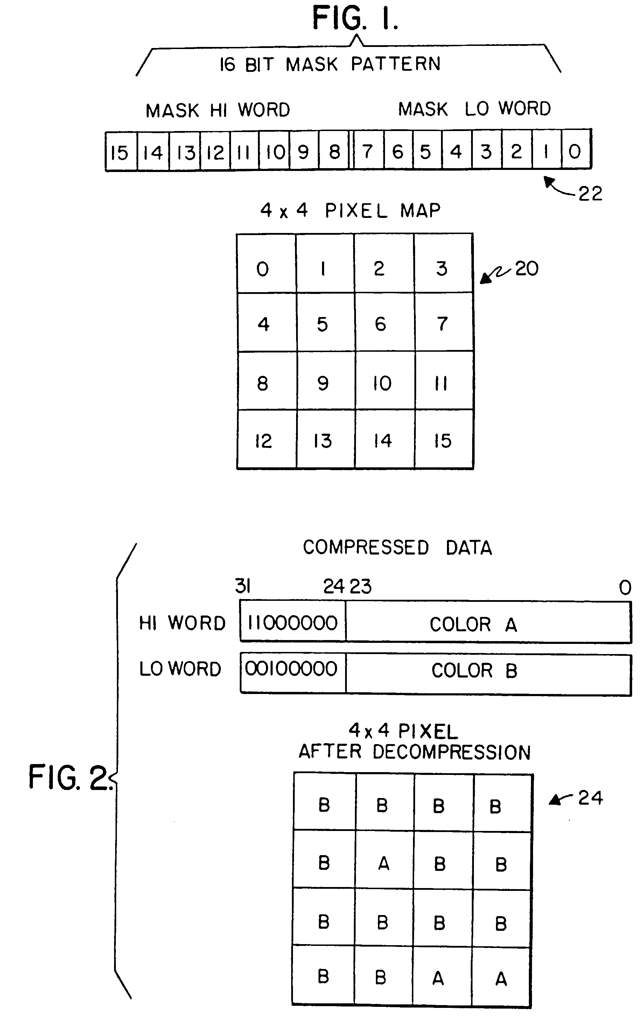

The basic idea of the algorithm is to represent each 4 by 4 region of pixels (48 bytes, assuming 3 bytes per pixel) by two colors (6 bytes) plus a 16-bit wide MASK. The two colors are calculated statistically to best represent the distribution of colors in the 4x4 pixel region. The two colors are called HI color and LO color. Each MASK bit determines whether the corresponding pixel should get either a HI or LO color. When the MASK is '1', then the corresponding pixel gets the HI color; and when it is '0', then the corresponding pixel gets the LO color. This is illustrated in Fig. 1, which shows the bit mapping of a 4 x 4 pixel region 20 to its MASK 22. Since 4 x 4 pixels can be represented by using HI and LO colors (3 bytes each) and a 16 bit MASK (2 bytes), the compression ratio is R_{cmp} =48/(3+3+2) =6.

The decompression mechanism is simpler than that of compression. For each 4x4 pixel matrix, a destination device receives two colors (HI and LO) and a 16 bit MASK. For each bit of the MASK, the corresponding pixel in the 4x4 pixel matrix gets either the HI color, if the MASK bit is '1', or the LO color if the MASK bit is '0'. Fig. 2 shows the compressed data format of an arbitrary 4 x 4 pixel area 24, where each pixel is either one of the two colors, A or B.

In a typical system, data received over the network is temporarily buffered into a FIFO store (first-in, first-out) until it is ready to be stored in a frame buffer. A preferred frame buffer is comprised of video random access memories (VRAM's). Such VRAM's are operated in the fast page mode where a memory cycle is typically 50 nS.

It is known that decompression can be done by storing the compressed data format into a frame buffer and then decompressing the pixel data at the time of video refresh. Another method is to decompress an image prior to storing it into the frame buffer. Although the first method requires less frame buffer memory than the second, it presents problems because the compressed pixel data format cannot easily be used for data manipulation and almost any such operation requires the pixel data to be decompressed first. Also, if the frame buffer stores only a compressed data format, then another frame buffer is needed to store uncompressed images. The solution is to decompress the data prior to storing it into the frame buffer, such that the frame buffer contains only a R, G, B pixel format.

There are a number of problems associated with decompression. The first is that the decompression must be done in real-time in order for the frame buffer not to be the bottleneck in the system. For example, for the HPPI bus, a transmission of 4x4 pixel compressed data takes nominally 80 nS. In order for the frame buffer not to be a bottleneck it must be able to perform the decompression in 80 nS per compressed data set. The decompression should be done in a cost-effective way, using parts that are available off-the-shelf.

A classical solution that improves a memory's bandwidth is to interleave the memory. There are two ways to interleave a memory. One is to access the interleaved memory in parallel such that, in one memory access time, there will be N operations for an N way interleaved memory. The second is to access interleaved memory in a time-serial overlapped manner, such that another memory access to a different module can be started 1/N memory cycle period later for an N-way interleaved memory.

In either case, the frame buffer should be designed such that the decompression bandwidth is greater than or equal to the communication network bandwidth so that the frame buffer is not the bottleneck of the system. In order to maximize the bandwidth, each memory module should have an independent data path and separate controls such that all modules can operate in parallel. Notice that as described before, in case of HPPI communication network, 16 pixels of information is transferred every 80 nS (16 pixels / 50 nS = 200 million pixels/seconds). If 50 nS bandwidth memory chips are used within the memory modules, then N must be at least 10 (10 pixels / 50 nS = 200 million pixels/ second). If N is 16, then a maximum bandwidth of 320 million pixels per second can be achieved (16 pixels / 50 nS). Although simple memory interleaving gives the best performance, it does not justify the complexity and cost of having multiple memory modules, each with its own separate data path and controls.

The second problem is that there must be access to the frame buffer from a local workstation. Furthermore, this access must be either in non-compressed mode or compressed mode. Non-compressed mode access is important if the decompressed data is used by the local workstation for image manipulation. The compressed mode access also allows an increase in performance of the local workstation.

The third problem is that for a high resolution monitor, the serial output of the VRAMs must be interleaved to provide the bandwidth necessary for that monitor. Since current VRAMs have serial output bandwidths of approximately 33 Mhz, a typical frame buffer design has serial output ports interleaved depending on the attached display. For example, for a monitor resolution of 1280 x 1024, the video bandwidth is 110 Mhz. Thus, four way VRAM serial output interleaving is sufficient for such resolution. However, for a monitor resolution of 2048 x 1536, the video bandwidth is 260 Mhz. This requires eight-way interleaving, since four way interleaving only gives 4 x 33 Mhz, or 132 Mhz, but 8 ways gives 264 Mhz. The frame buffer design and the decompression design should be able to provide flexible video output bandwidth such that the design is not limited to a monitor's resolution.

The prior art shows a variety of image compression/decompression schemes.

In U.S. Patent No. 4,857,992, issued August 15, 1989, entitled "Image Display Apparatus and Method" to Richards there is described a hardware compression/decompression mechanism in which an image is characterized by two sets of digital data. The first set of data is achieved by low-pass filtering the original image and then by sub-sampling of it. The second set of data is a delta pulse-code modulated set between the interpolated image of the first set and the original image. These two sets of data are compressed using run length coding techniques.

In U.S. Patent No. 4,975,771, issued December 4, 1990, entitled "Method And Apparatus For TV Broadcasting" to Kassatly there is described a method in which multiple channels of video can be broadcast on a single channel carrier by compressing the video data and then time-multiplexing as packets on the broadcast medium. Basically, this patent shows how a video signal carrier can be used more efficiently by transmitting multiple channel video on a single carrier.

In U.S. Patent No. 4,970,663, issued November 13, 1990 entitled "Method and Apparatus For Manipulating Digital Video Data" to Bedell et al. there is described a method for improving image quality by using a compression method in which 15 bit red, green, blue source image data is sub-sampled and then converted into 8-bit LUV luminance and chroma values. On a display, the LUV format data is expanded to a full resolution using a dithering technique.

In U.S. Patent No. 4,797,729, issued January 10, 1989 entitled "System Incorporating An Error Tolerant Picture Compression Algorithm" to Tsai, there is described a method of compression/decompression that is based on block truncation techniques. Decompression is accomplished serially through the use of multiplexers and registers. Both HI and LO color data are loaded into two registers, then the HI and LO data is chosen based on a bit MASK in pixel-serial order. The patent discloses the use of Y, I, Q color signal components and for the Y component, for instance, it requires 16 cycles to complete the decompression of a 4 x 4 set of pixels. Because of the serial nature of the decompression, its bandwidth is limited.

In U.S. Patent No. 4,580,134, issued April 1, 1986 entitled "Color Video System Using Data Compression and Decompression" to Campbell et al., there is described a system for encoding, transmitting, storing, and generating color images. This patent also uses block-truncation techniques wherein the compressed data blocks are stored into a block buffer memory. Then, the patent describes the use of "fast" serial decompression logic at the video output path. This system requires very sophisticated and expensive on-the-fly decoding circuitry to enable data transfer to a high performance graphics display. Furthermore, since the frame buffer only stores the compressed data format, it cannot be used to store non-compressed images. Since block truncation techniques employ a lossy compression/decompression method, a non-compressed mode is desirable when the quality of an image is the most important factor.

In U.S. Patent No. 4,564,915, issued January 14, 1986 entitled "YIQ Computer Graphics System" to Evans et al. there is described a computer graphics system that provides a color television raster scan video output. The architecture shown therein permits the frame buffer to be upgraded from a simple color map system to a RGB, full color resolution system but requires added memory storage.

In U.S. Patent No. 4,541,010, issued September 10, 1985 entitled "Electronic Imaging Camera" to Alston there is described an electronic camera utilizing a charge coupled device array as both an image sensing device and a buffer memory. A method is detailed in which a preview mode can be shown on a CRT monitor at a video rate without requiring another dedicated buffer.

An IBM Technical Disclosure Bulletin, August, 1985, pp. 958-959, to Asano describes an image compression/decompression scheme wherein image decompression occurs prior to storage in an image buffer. Subsequently, the stored image is mapped to an all-points-addressable memory for display in accordance with an accompanying command.

Accordingly, it is an object of this invention to provide an improved display system which preferably exhibits a frame buffer capable of real-time image decompression.

The object of the invention is solved basically by the features laid down in the independent claims.

The invention particularly provides an improved display system wherein image decompression can be achieved on a real time basis for a high definition display image and especially an improved display system which is capable of employing off-the-shelf hardware, but yet exhibits substantially improved system performance characteristics.

A display system is described which includes storage for receiving a compressed pixel image manifesting at least a pair of encoded colors and a bit MASK that defines which pixels of a pixel subset of the pixel image receive one of the colors. The system comprises a plurality of memory modules. The pixels in the subset are interleaved in the memory modules. A generator is provided for applying signals to cause data to be written into each of modules in parallel. Register means are provided for applying data manifesting the encoded colors to the modules. Control apparatus is responsive to the MASK bits for controlling the generator to write the encoded color data, in parallel and in a single memory cycle, into all pixel positions of the subset that are designated for the color(s) by MASK bit position values.

In the following a preferred embodiment of the invention is described in more detail with reference to the drawing in which
- Fig. 1: is a representation of a 4x4 pixel map and shows how its individual pixel positions thereof map into a 16 bit MASK pattern that is used to identify color allocations thereto.
- Fig. 2: shows a compressed data format of an arbitrary 4x4 pixel area, where each pixel is assigned one of two encoded colors.
- Fig. 3: is a schematic illustrating the relationship of the pixels on a display surface to memory positions in a 4x4 module frame buffer (and within one module thereof).
- Fig. 4: is a block diagram showing the elements of an embodiment of the invention.
- Fig. 5: is a block diagram of circuitry for generating CAS* signals in response to MASK and control inputs.
- Fig. 6: is a waveform diagram illustrating the operation of a conventional VRAM.
- Fig. 7: illustrates the decompression memory cycle employed by the invention.
- Fig. 8: is a block diagram of an embodiment of the invention enabling extended video-rate performance.
- Fig. 9: is a block diagram of an embodiment of the invention enabling interfacing to higher bandwidth communication networks.
- Fig. 10: is a block diagram of an embodiment of the invention enabling higher resolution frame buffer operation.

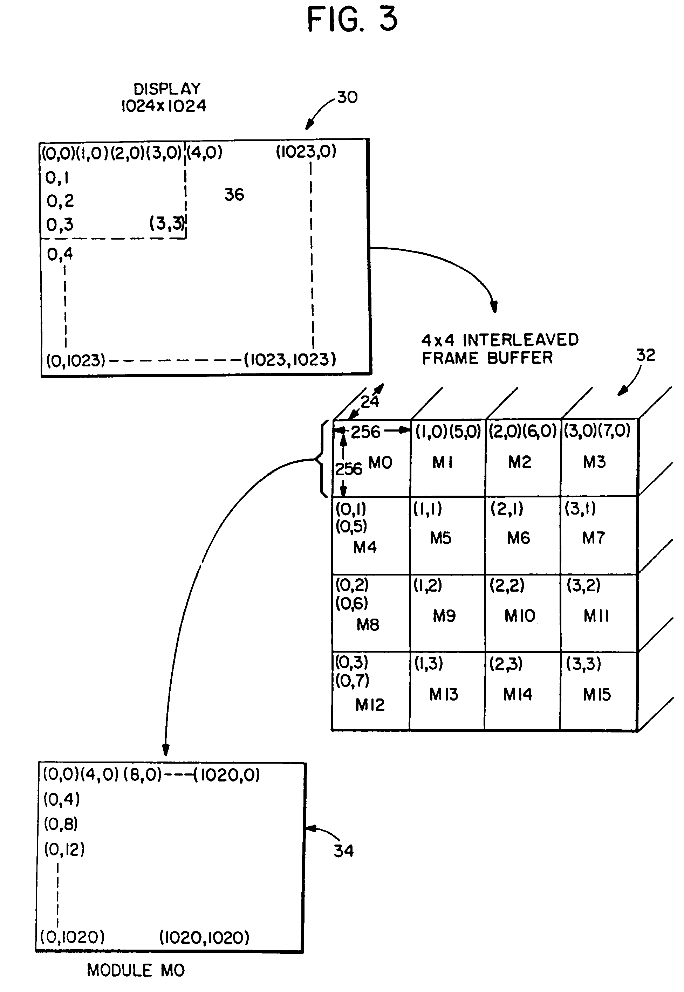

Referring now to Fig. 3, the interrelation between a display 30, a 16 memory module frame buffer 32 and an individual frame buffer module 34 will be hereinafter discussed. Display 32 is, for example, comprised of 1024 x 1024 pixels that are displayed in a raster manner. The expanded subsection 36 shows the upper left-hand corner of display 30 and comprises a 4 pixel x 4 pixel subset and indicates the respective addresses of each of the pixels therein. Each pixel address has a column indication followed by a row indication with the upper left hand pixel having an address (0,0), followed by (1,0), (2,0) etc. on row 0. Each pixel is represented by 3 bytes (8 bits each) of color information.

A 4x4 interleaved frame buffer 32 is employed to store the pixel information from display 30 and comprises 16 memory modules M0-M15. Each memory module is 256 x 256 x 24 bit positions. The pixel addresses are interleaved into frame buffer 32 both vertically and horizontally, such that each pixel of a 4x4 pixel matrix resides in a different memory module. For example, for the 4x4 matrix 36 shown in display 30, address (0,0) resides in memory module M0; (1,0) in memory module M1, (2,0) in memory module M2, etc. Similarly, pixel address (0,1) resides in memory module M4; (0,2) in memory module M8, etc. At 34, a blow up of module M0 is shown indicating the pixel addresses stored therein. In the known manner, every fourth pixel address can be found therein (both rows and columns).

It can thus be seen, assuming 4x4 subsets of the pixel matrix are operated upon, that memory modules M0-M15 can be operated simultaneously to alter the state of pixel data stored therein. As will be hereinafter apparent, the interleaving shown in Fig. 3 enables, in combination with the incoming data format, real-time decompression to occur.

To reiterate, data is received in the format shown in Fig. 2 with compressed pixel data being received in two succeeding 32 bit words. A first word includes 24 bits (0:23) indicating a first color (A) and an 8 bit (24:31) HI word MASK. The next 32 bit word contains the succeeding color (color B) and an eight bit LO word MASK. Together, the LO and HI word masks map the two colors A and B onto the respective pixel map positions in a single decompression memory cycle.

In the following description, it is assumed that frame buffer memory 32 is comprised of VRAM memory chips that employ row address strobe (RAS) signals and column address strobe (CAS) signals. As is known to those skilled in the art, those signals are active in the inverted state and will be indicated as such in this text when the signal designation is shown as RAS* or CAS*.

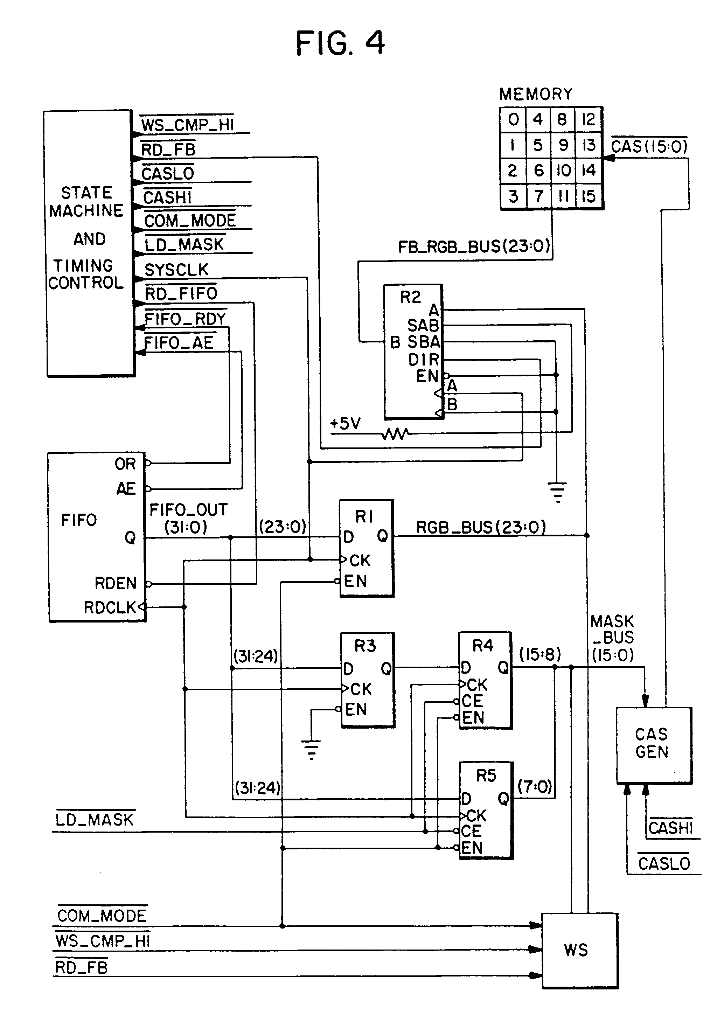

The frame buffer system shown in Fig. 4 comprises a state machine 50 which provides both address and timing control signals on its output lines. State machine 50 is essentially a sequencer that is organized by a central processor (not shown). The system further includes a FIFO store 52 which feeds into registers R1, R2, R3, R4 and R5. Compressed data is fed to FIFO 52 via data in cable 54. A CAS* generator 56 has applied thereto bit MASK portions from registers R4 and R5 and a pair of control signals CASHI* and CASLO*. A workstation 58 is also interconnected with CAS* generator 56 and register R2 to enable a workstation 58 to also access frame buffer 32. Frame buffer 32 is organized as shown in Fig. 3 and comprises a 4x4 matrix of modules M0-M15.

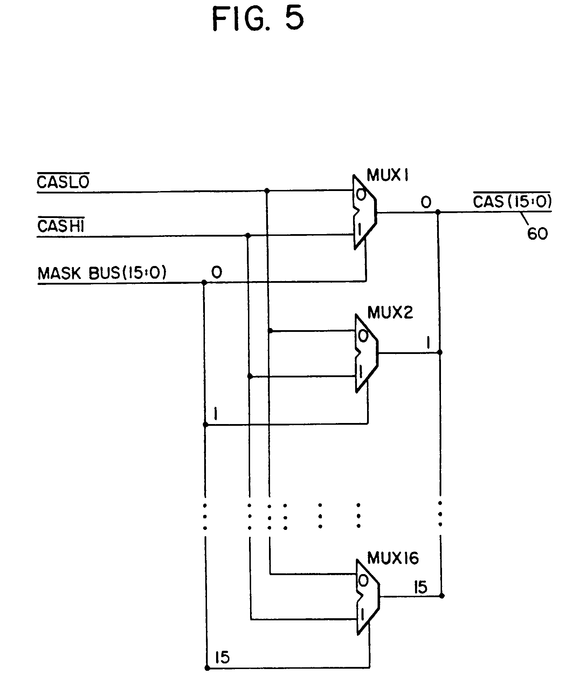

In Fig. 5, details of CAS* generator 56 are shown. Sixteen multiplexers (MUX1 through MUX16) receive CASLO* and CASHI* input levels. As will become apparent hereinafter, the CASLO* and CASHI* levels become active at different times in a single memory cycle. In addition, a bit level from the 16 bit MASK pattern is applied to each multiplexer as a controlling input and causes the respective multiplexer to provide an output upon the occurrence of the active state of one of its controlling inputs. If the MASK input is a 1, the respective MUX selects CASHI* and if the MASK input is a 0, the respective MUX selects CASLO*. Since CASLO* and CASHI* levels become active at different times in the cycle, 16 CAS* levels are produced on output cable 60 in a single memory cycle. Each CAS* level controls the writing of a color value into a respective pixel position of one of the 16 pixels within the 4x4 pixel matrix.

For the simplicity of description the HI color write will be described as preceding the LO color write for a given set of compressed data. This is not, however, a limitation of the invention, since either order can be used.

The method to be described hereafter for generating CAS* signals allows an 80 nS decompression cycle. The method reduces the time it takes to activate two CAS signals, CASHI* and CASLO*, where CASHI* is used to load the HI color and CASLO* is used to load the LO color. All HI colors of a compressed data set are stored into VRAMs using the same row and column addresses and are loaded during a CASHI* active time in a single memory cycle. When CASLO* becomes active later in the same memory cycle, all LO colors are loaded, thus enabling 16 pixel positions to be loaded with both colors in a single memory cycle.

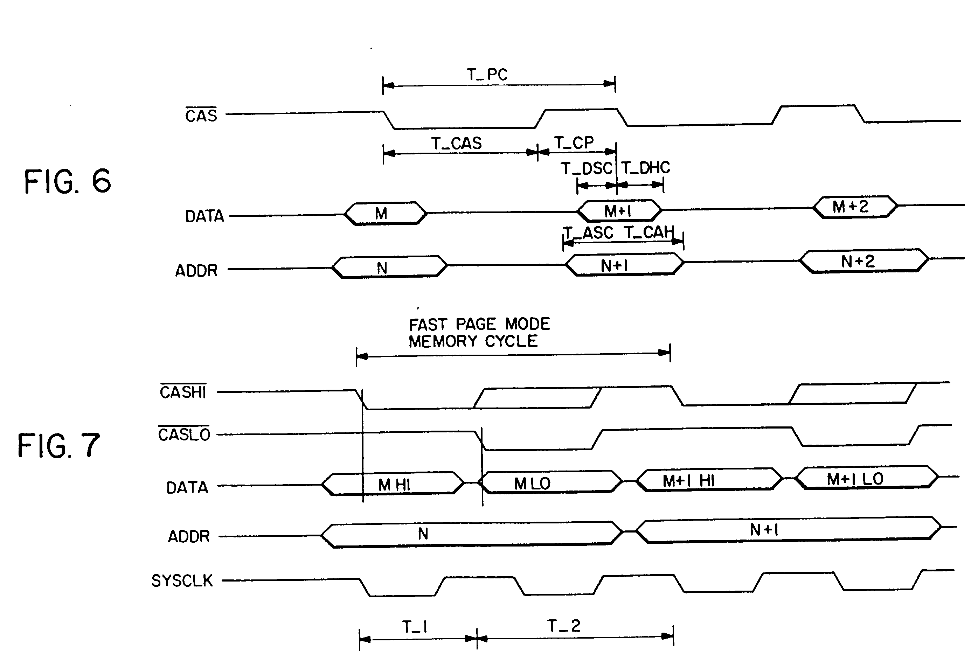

Figure 6 shows a typical timing diagram specified for a VRAM. The timing information is from a Mitsubishi, 1 Mbit VRAM part number M5M442256JL-8. This timing information determines the performance of the frame buffer.
* t_{pc} - Fast Page Mode Cycle Time. Minimum of 50 nS
* t_{cas} - CAS -Pulse Width. Minimum of 25 nS.
* t_{cp} - CAS-Precharge Time for Fast Page Mode. Minimum of 10 nS.
* t_{dsc} - Data Setup Time. Minimum of 0 nS.
* t_{dhc} - Data Hold Time. Minimum of 25 nS.
* t_{asc} - Column Address Setup Time. Minimum of 5 nS.
* t_{cak} - Column Address Hold Time. Minimum of 20 nS.

Fig. 7 shows the timing diagram of a fast compressed mode page mode cycle used by this invention. A less than 100nS (2t_{pc}) cycle is achieved using a VRAM with t_{pc} of 50 nS. As shown in the timing diagram, CASHI* and CASLO* signals can be overlapping. This is possible, since for a compressed mode memory cycle, only one CAS* is selected, whether it be CASHI* or CASLO*, but not both at the same time. M HI and M LO on the DATA Line indicate when the HI and LO colors are manifested by register R2 in a memory cycle. The minimum possible cycle time for decompression is, T_{cmp} = t₁ + t₂, where t₁ is t_{dhc} (Data hold time) and t₂ is t_{pc} (Page Mode Cycle).

It should be noted that t₁ is necessary so that data hold time for the first color write cycle is not violated. Time t₂ is necessary due to the memory operation where a memory module has a LO color compressed mode followed by a HI color compressed mode. The separation between these two consecutive CAS* falling edges must be at least t_{pc}.

As indicated above, a Mitsubishi, 1 Mbit VRAM exhibits a, t_{dhc}=25 nS and a t_{pc}=50 nS. Thus ideally, t_{cmp}=75 nS. With 75 nS decompression, HPPI compressed data can be received at full transfer rate. Since the time required for a decompression is reduced from 100 nS to 75 nS, the performance improvement due to the two CAS method is, R_{2cas}=100/75=1.33.

In order for the frame buffer not to be a network bottleneck, the relationship T ≤ NP must hold true, where T is the throughput of the network, N is the number of 4x4 memory modules interleaved, and P is the performance of the frame buffer decompression for a 4x4 memory module. For HPPI, T = 200 million pixels/second. If a two CAS* method is not used, then with a single 24 bit R, G, B data path, each decompression takes 100 nS with a 50 nS VRAM. This results in P = 160 million pixels/second. Therefore, in order for the frame buffer not to be the bottleneck, N must be >= 2. Another 4X4 memory module is needed which operates in parallel. Alternately, an expensive method of interleaving, where each memory module has its own separate data path and controls may be used. However, if a two CAS* method is used, then P = 213 million pixels/second can be achieved Therefore only one 4X4 memory module with only a single 24 bit R, G, B data path is needed.

Referring now back to Fig. 4 in conjunction with Fig. 7, the operation of the on-line decompression/buffer system will be described. Succeeding 32 bit data words are fed via data input 54 into FIFO store 52. A free running system clock (SYSCLK) is generated by state machine 50 and controls the operation of FIFO 52 as well as synchronizing the remaining components of the system.

When enough data has been received in FIFO 52, the FIFO RDY* signal is activated to signify that there is data in FIFO 52 to be processed. State machine 50 recognizes that signal and enters the fast page memory access mode by activating communication mode signal COM MODE* and RD FIFO* until it aborts the fastpage memory mode access upon detecting FIFO almost empty (FIFO AE*). State machine 50 also generates a load MASK enable signal (LD MASK*) every second SYSCLK for the duration of RD FIFO*. Note that since the compressed data always comprises a pair of 32 bit words, the duration of RD FIFO* is always a multiple of two SYSCLKs.

24 bit color data (23:0) is read out of FIFO 52 and piped to registers R1 and R2. HI MASK bits (15:8) are also read out of FIFO 52 and are temporarily stored in register R3 for a clock period and are then loaded into register R4 on the same clock period when LO MASK bits (7:0) are loaded into register R5. The 16 MASK bits (15:0) are held in registers R4 and R5 while HI and LO color data bits are successively loaded into register R2 and are driven into memory modules 32.

Memory 32, as described above, is configured with 4x4 memory modules, with pixels interleaved therein in both the horizontal and vertical directions in a 4x4 pattern. CAS* generator 56, in a memory cycle, provides 16 CAS* signals whose levels are controlled by the color MASK. During the first portion of a decompression cycle (i.e. CASHI*), a 24 bit HI color is broadcast from register R2 to memory modules 32, and CAS* generator 56 generates active levels on those of its output lines that correspond to bit positions exhibiting a 1 level in the bit MASK. This enables the HI color data to be written in parallel into selected pixels corresponding to the high order MASK bit positions that are at the 1 level. On the second part of the decompression cycle (i.e. CASLO*), the LO color pixels are written under control of the 0 bits in the bit MASK, thus completing a decompression cycle.

The above operation is partially illustrated in Fig. 7 where, when CASHI* drops to the active state, 1 bits in the MASK cause CAS* signals to be applied to memory 32 so that the HI color bits emanating from register R2 are written to the 16 pixel memory positions. In a similar manner, when CASLO* drops to the active level, the LO color bits are written to the pixel positions corresponding to the 0 bits in the MASK.

Workstation 58 (see Fig. 4) also has access to buffer memory 32 via busses 60 and 62. Through appropriate imposition of MASK bits on bus 60 and color data on bus 62, the CASHI* and CASLO* signals can achieve the writing of the color data into memory modules 32, as above noted.

When a very high resolution frame buffer is desired, the video clock rate cannot be ignored. For example, a VRAM has a serial port which can be operated at 33 Mhz. But, for a 60 Hz, 2048 x 1536 resolution monitor, the video clock speed is in excess of 260 Mhz. It can be seen that (260 Mhz / 33 Mhz) = 7.88. In order to match the video clock, the VRAM must be interleaved a minimum of 8 ways to provide enough serial output bandwidth for the high resolution monitor. The design shown in Fig. 4 is modular and the video output bandwidth can be increased to 4P of a single VRAM serial output, where P is a positive integer which represents the number of 4x4 sets of memory modules being used. This allows the system's video throughput to be increased to match any resolution monitor. A 60 Hz, 2048 x 2048 resolution monitor requires a 360 Mhz video rate. Since (360/33)=10.9, then P=3 would provide enough video bandwidth.

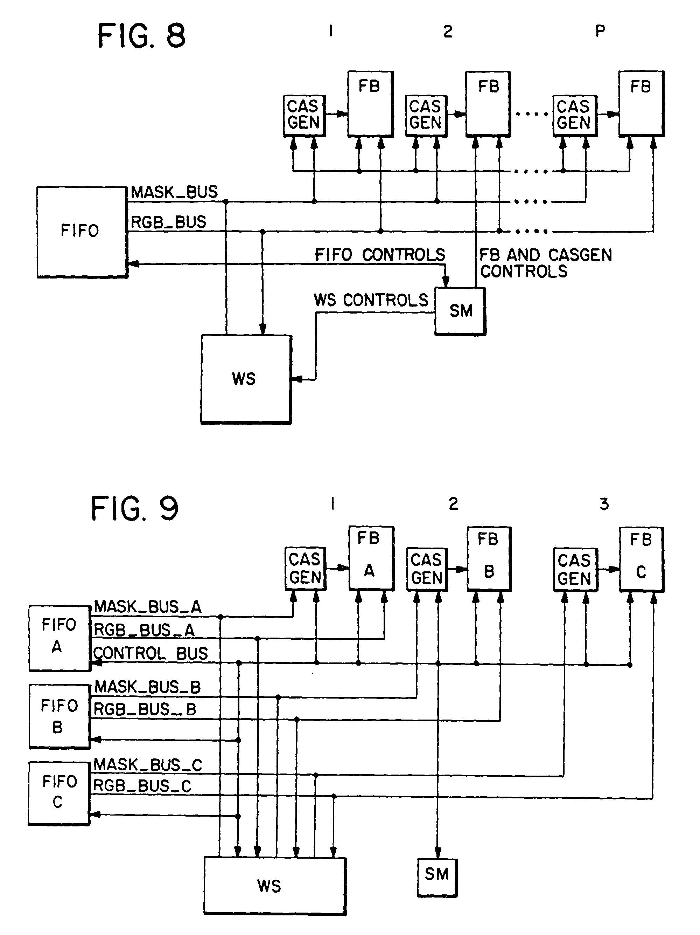

As shown in Fig. 8, this can be done by adding more 4x4 memory modules onto the main bus. A module consists of CASGEN* and a frame buffer (FB). The 4x4 memory elements themselves are interleaved. In other words, a first module will have pixels 0 through 3, a second module will have pixels 4 through 7, until a j-th module which will have pixels 4(j-1) through 4(j-1) + 3. The controlling state machine (SM) must be modified in a way that it selects the correct CASGEN* and frame buffer when memory requests are made. Using this modular 4x4 approach, a video output throughput can be extended indefinitely to match any video rate for any monitor.

When the design requires interfacing to an even higher bandwidth communication network, it can be modified to accept higher throughputs from the network by parallelizing the input. This can be done by adding more FIFO's, CASGEN's, and FB's with a slight modification to the existing SM. Figure 9 shows an example, where there are three sets of FIFO's, CASGEN's, and FB's. With this arrangement, there will be parallelization among three modules to increase the performance by a factor of 3. Due to the modular approach, the number of FIFO's, CASGEN's, and FB's added can be increased indefinitely to match any network bandwidth.

The resolution of the frame buffer can also be extended. For example, if each memory module is designed using 1 million bit VRAMs, each of which is configured as 512 rows by 512 columns by 4 bits each, then the 4x4 memory modules are configured as 2048 rows by 2048 columns by 4 bit-planes. This can be extended to match any system requirement. First, increasing bit-planes per pixel can be done by adding more VRAMs. For example, if a 30 bit R,G,B data format is used, then eight 1 Mbit VRAMs per memory module can be used (this configuration can provide up to 32 bit-planes). Although 2048 x 2048 resolution frame buffer is adequate for the most applications, there are situations such as double buffering, real-time panning, or higher resolution monitors where even larger frame buffer configurations are needed.

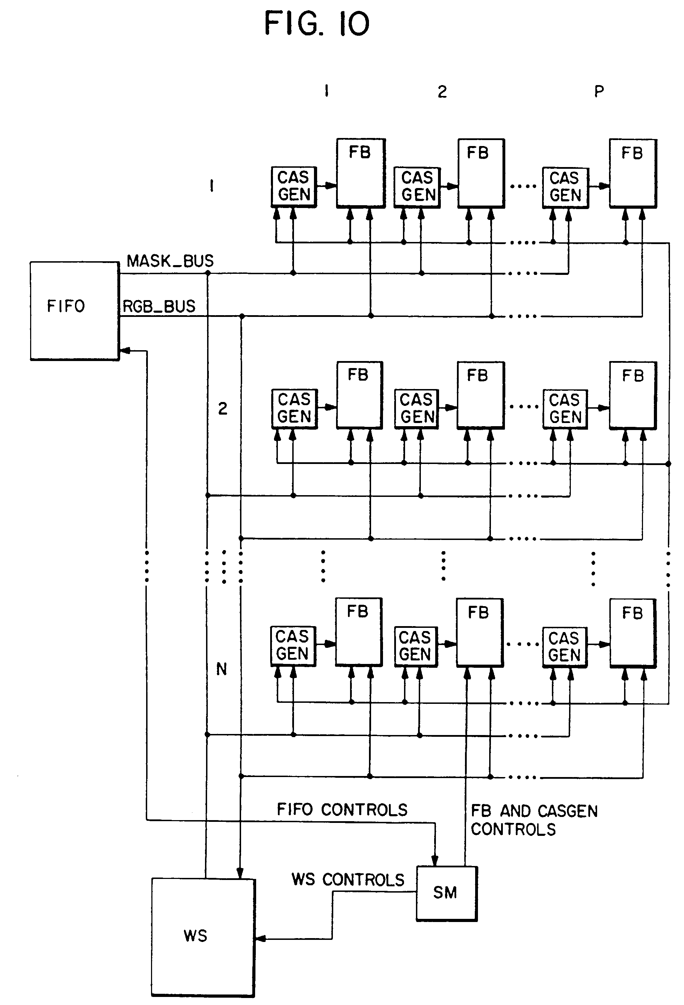

The invention may be extended indefinitely in both horizontal and vertical directions to accommodate any size frame buffer. If the frame buffer needs to be extended horizontally, then more 4x4 modules can be added horizontally as shown on Fig. 10, where there are P 4x4 memory modules horizontally which provide a total of 2048P horizontal pixels. If the frame buffer needs to be extended vertically, then more horizontal rows of P 4x4 modules can be added vertically, as shown, where there are N 4x4 memory modules vertically which provides a total of 2048N vertical pixels.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A display system comprising storage means adapted to receive compressed pixel image data manifesting at least a pair of encoded colors and a bit mask comprising bit positions with assigned values that define which pixels in a pixel subset of said pixel image receive one of said colors, said system further comprising:
a plurality of memory modules for storage of said pixels, said memory modules being adapted to store said pixels in a said pixel subset in an interleaved fashion, such that each pixel of a said pixel subset resides in a different memory module;
generator means for applying signals to cause data to be written in parallel into said plurality of modules;
register means for manifesting said encoded color data; and
means for controlling said generator means to write the color data which is encoded by means of said compressed pixel image data and said bit mask into all pixel positions of said pixel subset designated for said color by said mask bit positions.

2. The display system of claim 1, wherein said pair of encoded colors are written in parallel into said memory modules in a single memory cycle, each said bit mask bit position mapped onto a specific memory module, said system further comprising:
control means for activating a first signal during said single memory cycle to operate said generator means to write first encoded color data into said memory modules under control of first value manifestations of said mask's bit positions and for activating a second signal during said single memory cycle to write second encoded color data into said memory modules under control of second value manifestations of said mask's bit positions.

3. The display system of claim 2, wherein said first and second signals are activated so that portions thereof overlap.

4. The display system according to any one of the preceding claims, wherein said memory modules comprise a 4x4 array of modules, 4x4 pixel data subsets in said modules interleaved so that each pixel in a said 4x4 pixel data subset resides in a different said module of said array.

5. The display system according to any one of the preceding claims, wherein each said module is a video random access memory that employs concurrently applied row address strobe (RAS*) and column address strobe (CAS*) signals to accomplish data writes and wherein said generator means is energized by said first signal to apply column address strobe (CAS*) signals to pixel storage positions corresponding to mask bit positions that manifest a first kind bit value, and to apply a second set of column address strobe (CAS*) signals to pixel storage positions corresponding to mask bit positions that manifest second kind bit values.

6. The display system according to any one of the preceding claims, wherein said register means manifests said first of said pair of encoded colors during a first portion of said memory cycle and a second of said pair of colors during a second memory portion of said cycle, whereby said pair of colors are written to all said 4x4 pixel subset in said modules in said single memory cycle.

7. The display system according to any one of the preceding claims said bit mask including bit positions with assigned values that define which pixels in an n x m pixel subset of said pixel image receive one of said colors,
in said plurality of memory modules, each module comprised of a set of submodules, a row of n pixels in a pixel subset stored across a row of n submodules in a memory module in an interleaved fashion, additional series of n pixels in pixel subsets in said row stored in interleaved fashion in submodules in succeeding memory modules, all said memory modules connected in parallel;
column address strobe (CAS*) generator means associated with each memory module for applying column address strobe (CAS*) signals to enable data to be written into submodules within said associated memory module;
control means for causing said column address strobe (CAS*) generator means to write said encoded color data into storage areas within said submodules storing said pixel subset, under control of said bit mask bit position values, whereby a color value is written in parallel, across a plurality of said memory modules.

8. The display system as recited in claim 7, wherein all said memory modules are connected in parallel to said manifesting means.

9. The display system as recited in claim 7 or 8 further comprising:
additional pluralities of said memory modules connected to said manifesting means, said memory modules arranged in columns and rows, whereby said control means enables color data to be written into interleaved pixel storage positions, in said memory modules.

10. The display system according to any one of claims 7 to 9 further comprising:
additional means for manifesting said color encoded data, all said means for manifesting indicating said encoded color data in parallel, each said manifesting means connected in parallel to a plurality of said memory modules, whereby said control means is operative to cause each said color encoded data to be written into said connected memory modules in an interleaved fashion and in parallel.

## Patentansprüche

1. Anzeigesystem Speichermittel umfassend, die so ausgelegt sind, daß sie komprimierte Bildelementebilddaten, die mindestens ein Paar codierter Farben anzeigen, und eine Bitmaske empfangen, wobei die Bitmaske Bitpositionen mit zugeordneten Werten umfaßt, die definieren, welche Bildelemente innerhalb eines Bildelemente-Untersatzes des Bildelementebildes eine der Farben erhalten, wobei das System desweiteren umfaßt:
eine Vielzahl Speichermodule zum Speichern der Bildelemente, wobei die Speichermodule so ausgelegt sind, daß sie die Bildelemente in dem Bildelemente-Untersatz in verschachtelter Form speichern, so daß jedes Bildelement des Bildelemente-Untersatzes in einem anderen Speichermodul steht;
Generatormittel zum Anlegen von Signalen, die bewirken, daß die Daten parallel in die Vielzahl Module geschrieben werden;
Registermittel zum Anzeigen der codierten Farbdaten; und
Mittel zum Steuern der Generatormittel, um die Farbdaten, welche durch die komprimierten Bildelementebilddaten und die Bitmaske codiert sind, in alle Bildelementepositionen des Bildelemente-Untersatzes zu schreiben, denen durch Bitpositionen in der Maske diese Farbe zugewiesen ist,

2. Anzeigesystem gemäß Anspruch 1, dadurch gekennzeichnet, daß das Paar codierter Farben während eines einzelnen Speicherzyklus parallel in die Speichermodule geschrieben wird, jede Bitposition der Bitmaske auf ein spezielles Speichermodul abgebildet wird und das System desweiteren umfaßt:
Steuerungsmittel zum Aktivieren eines ersten Signals zur Ansteuerung der Generatormittel während des einzelnen Speicherzyklus, um unter Steuerung eines ersten auf den Bitpositionen der Maske stehenden Wertes erste codierte Farbdaten in die Speichermodule zu schreiben, und zum Aktivieren eines zweiten Signals während des einzelnen Speicherzyklus, um unter Steuerung eines zweiten auf den Bitpositionen der Maske stehenden Wertes zweite codierte Farbdaten in die Speichermodule zu schreiben.

3. Anzeigesystem gemäß Anspruch 2, dadurch gekennzeichnet, daß die ersten und zweiten Signale so aktiviert werden, daß Teile derer überlappen.

4. Anzeigesystem gemäß einem der vorhergehenden Ansprüche, dadurch gekennzeichnet, daß die Speichermodule eine Matrix aus 4x4 Modulen umfassen, wobei 4x4 Bildelementdaten-Untersätze in den Modulen so verschachtelt werden, daß jedes Bildelement in einem der 4x4 Bildelementdaten-Untersätze in einem anderen Modul der Matrix steht.

5. Anzeigesystem gemäß einem der vorhergehenden Ansprüche, dadurch gekennzeichnet, daß jedes der Module ein Videospeicher mit wahlfreiem Zugriff ist, der gleichzeitig angelegte Zeilenanwahlsignale (RAS*) und Spaltenanwahlsignale (CAS*) benutzt, um das Schreiben der Daten auszuführen, und dadurch, daß die Generatormittel durch das erste Signal veranlaßt werden, Spaltenanwahlsignale (CAS*) an die Bildelemente-Speicherplätze anzulegen, die Bitpositionen der Maske entsprechen, welche einen ersten Bitwert anzeigen, und einen zweiten Satz Spaltenanwahlsignale (CAS*) an die Bildelemente-Speicherplätze anzulegen, die Bitpositionen der Maske entsprechen, welche einen zweiten Bitwert anzeigen.

6. Anzeigesystem gemäß einem der vorhergehenden Ansprüche, dadurch gekennzeichnet, daß die Registermittel während eines ersten Teils des Speicherzyklus die erste aus dem Paar codierter Farben anzeigen und während eines zweiten Teils des Zyklus die zweite aus dem Paar codierter Farben anzeigen, wobei das Farbenpaar während des einzelnen Speicherzyklus in alle 4x4 Bildelemente-Untersätze der Module geschrieben wird.

7. Anzeigesystem gemäß einem der vorhergehenden Ansprüche, wobei die Bitmaske Bitpositionen mit zugeordneten Werten enthält, die definieren, welche Bildelemente in einem n x m Bildelemente-Untersatz des Bildelementebildes eine der Farben erhalten, wobei innerhalb der Vielzahl der Speichermodule jedes Modul aus einem Satz Untermodule besteht, wobei eine Zeile aus n Bildelementen in einem Bildelemente-Untersatz in verschachtelter Form in einer Zeile aus n Untermodulen des Speichermoduls gespeichert wird, wobei zusätzliche Folgen aus n Bildelementen in Bildelemente-Untersätzen innerhalb der Zeile in verschachtelter Form in Untermodulen aufeinanderfolgender Speichermodule gespeichert werden und alle Speichermodule parallelgeschaltet sind;
wobei jedem Speichermodul Generatormittel für die Spaltenanwahlsignale (CAS*) zugeordnet sind, um Spaltenanwahlsignale (CAS*) anzulegen, die die Daten zum Einschreiben in Untermodule des zugeordneten Speichermoduls freigeben;
wobei Steuerungsmittel bewirken, daß die Generatormittel für die Spaltenanwahlsignale (CAS*) unter Steuerung der Werte der Bitpositionen der Bitmaske die codierten Farbdaten in Speicherbereiche innerhalb der Untermodule schreiben, die den Bildelemente-Untersatz speichern, wobei ein Farbwert parallel in eine Vielzahl Speichermodule geschrieben wird.

8. Anzeigesystem gemäß Anspruch 7, dadurch gekennzeichnet, daß alle Speichermodule zu dem Anzeigemittel parallelgeschaltet sind.

9. Anzeigesystem gemäß einem der Ansprüche 7 oder 8, desweiteren umfassend:
eine zusätzliche Vielzahl Speichermodule, die an die Anzeigemittel angeschlossen sind, wobei die Speichermodule in Zeilen und Spalten angeordnet sind und die Steuerungsmittel das Schreiben der Farbdaten in verschachtelte Bildelemente-Speicherplätze der Speichermodule freigeben.

10. Anzeigesystem gemäß einem der Ansprüche 7 bis 9, desweiteren umfassend:
zusätzliche Mittel zum Anzeigen der codierten Farbdaten, wobei alle Mittel zum Anzeigen der codierten Farbdaten, die codierten Farbdaten parallel anzeigen, jedes der Anzeigemittel parallel an eine Vielzahl Speichermodule angeschlossen ist und wobei die Steuerungsmittel so betrieben werden, daß sie bewirken, daß alle farbcodierenden Daten parallel und in verschachtelter Form in die angeschlossenen Speichermodule geschrieben werden.

## Revendications

1. Système d'affichage comprenant un moyen de mémorisation adapté pour recevoir des données d'image de pixels compressées manifestant au moins une paire de couleurs codées et un masque de bit comprenant des positions de bits avec des valeurs affectées qui définissent quels pixels dans un sous-ensemble de pixels de ladite image de pixels reçoivent l'une desdites couleurs, ledit système comprenant en outre :
une pluralité de modules de mémoire destinés à la mémorisation desdits pixels, lesdits modules de mémoire étant adaptés pour mémoriser lesdits pixels dans un dit sous-ensemble de pixels d'une façon entrelacée, de telle sorte que chaque pixel d'un dit sous-ensemble de pixels réside dans un module de mémoire différent,
un moyen de générateur destiné à appliquer des signaux afin d'amener les données à être écrite en parallèle dans ladite pluralité de modules,
un moyen de registre destiné à manifester lesdites données de couleur codées, et
un moyen destiné à commander ledit moyen de générateur afin d'écrire les données de couleur qui sont codées au moyen desdites données d'image de pixels compressées et ledit masque de bit dans toutes les positions de pixels dudit sous-ensemble de pixels désigné pour ladite couleur par lesdites positions de bits de masque.

2. Système d'affichage selon la revendication 1, dans lequel ladite paire de couleurs codées est écrite en parallèle dans lesdits modules de mémoire suivant un cycle de mémoire unique, chaque dite position de bit du masque de bit étant topographiée sur un module de mémoire particulier, ledit système comprenant en outre :
un moyen de commande destiné à activer un premier signal pendant ledit cycle de mémoire unique afin de mettre en oeuvre ledit moyen de générateur pour écrire les premières données de couleur codées dans lesdits modules de mémoire sous la commande des premières manifestations de valeur desdites positions de bit du masque et afin d'activer un second signal pendant ledit cycle de mémoire unique afin d'écrire des secondes données de couleur codées dans lesdits modules de mémoire sous la commande des secondes manifestations de valeur desdites positions de bit du masque.

3. Système d'affichage selon la revendication 2, dans lequel lesdits premier et second signaux sont activés de façon à ce que des parties de ceux-ci se recouvrent.

4. Système d'affichage selon l'une quelconque des revendications précédentes, dans lequel lesdits modules de mémoire comprennent un tableau 4x4 de modules, des sous-ensembles de données de pixels 4x4 dans lesdits modules étant entrelacés de façon à ce que chaque pixel dans un dit sous-ensemble de données de pixels 4x4 réside dans un dit module différent dudit tableau.

5. Système d'affichage selon l'une quelconque des revendications précédentes, dans lequel chaque dit module est une mémoire vive vidéo qui utilise des signaux de validation d'adresse de ligne (RAS*) et de validation d'adresse de colonne (CAS*) appliqués en même temps afin d'accomplir des écritures des données et dans lequel ledit moyen de générateur est activé par ledit premier signal afin d'appliquer les signaux de validation d'adresse de colonnes (CAS*) aux positions de mémorisation de pixels correspondant aux positions de bits du masque qui manifestent une valeur de bit d'un premier type, et afin d'appliquer un second ensemble de signaux de validation d'adresse de colonne (CAS*) aux positions de mémorisation de pixels correspondant aux positions de bits du masque qui manifestent des valeurs de bit d'un second type.

6. Système d'affichage selon l'une quelconque des revendications précédentes, dans lequel ledit moyen de registre manifeste ladite première couleur parmi ladite paire de couleurs codées pendant une première partie dudit cycle de mémoire et une seconde couleur parmi ladite paire de couleurs pendant une seconde partie en mémoire dudit cycle, d'où il résulte que ladite paire de couleurs est écrite dans la totalité desdits sous-ensembles de pixels 4x4 dans lesdits modules dans ledit cycle de mémoire unique.

7. Système d'affichage selon l'une quelconque des revendications précédentes, ledit masque de bit comprenant des positions de bits avec des valeurs affectées qui définissent quels pixels dans un sous-ensemble nxm de pixels de ladite image de pixel reçoivent l'une desdites couleurs,
dans ladite pluralité de modules de mémoire, chaque module est constitué d'un ensemble de sous-modules, une ligne de n pixels dans un sous-ensemble de pixels étant mémorisée de façon répartie sur une ligne de n sous-modules dans un module de mémoire d'une façon entrelacée, une série supplémentaire de n pixels dans des sous-ensembles de pixels dans ladite ligne étant mémorisée d'une façon entrelacée en sous-modules dans des modules de mémoire successifs, la totalité desdits modules de mémoire étant reliés en parallèle,
un moyen de générateur de validation d'adresse de colonne (CAS*) étant associé à chaque module de mémoire afin d'appliquer les signaux de validation d'adresse de colonne (CAS*) pour permettre que les données soient écrites dans les sous-modules à l'intérieur dudit module de mémoire associé,
un moyen de commande destiné à amener ledit moyen de générateur de validation d'adresse de colonne (CAS*) à écrire lesdites données de couleur codées dans des zones de mémorisation à l'intérieur desdits sous-modules mémorisant ledit sous-ensemble de pixels, sous la commande desdites valeurs de position de bit du masque de bit, d'où il résulte qu'une valeur de couleur est écrite en parallèle, d'une façon répartie sur une pluralité desdits modules de mémoire.

8. Système d'affichage selon la revendication 7, dans lequel la totalité desdits modules de mémoire est reliée en parallèle auxdits moyens de manifestation.

9. Système d'affichage selon la revendication 7 ou la revendication 8 comprenant en outre :
des pluralités supplémentaires desdits modules de mémoire reliées auxdits moyens de manifestation, lesdits modules de mémoire étant agencés en colonnes et en lignes, d'où il résulte que ledit moyen de commande permet que des données de couleur soient écrites dans des positions de mémorisation de pixels entrelacés, dans lesdits modules de mémoire.

10. Système d'affichage selon l'une quelconque des revendications 7 à 9 comprenant en outre :
un moyen supplémentaire destiné à manifester lesdites données codées de couleur, la totalité desdits moyens destinée à manifester indiquant lesdites données de couleur codées en parallèle, chaque dit moyen de manifestation étant relié en parallèle à une pluralité desdits modules de mémoire, d'où il résulte que ledit moyen de commande est mis en oeuvre pour amener chacune desdites données codées de couleur à être écrite dans lesdits modules de mémoire reliés d'une façon entrelacée et en parallèle.
